Europäisches Patentamt

European Patent Office

Office européen des brevets

(19)

(11) Publication number: **0 038 387**
**B1**

(12)     EUROPEAN PATENT SPECIFICATION

(45) Date of publication of patent specification: **06.06.84**

(51) Int. Cl.³: **C 08 F 10/06, C 08 F 2/02,
C 08 F 4/62, C 08 F 6/28**

(21) Application number: **80301231.9**

(22) Date of filing: **17.04.80**

(54) **Polymerization process.**

(43) Date of publication of application:
**28.10.81 Bulletin 81/43**

(45) Publication of the grant of the patent:
**06.06.84 Bulletin 84/23**

(84) Designated Contracting States:
**BE DE FR GB NL**

(56) References cited:
**FR - A - 1 345 830
GB - A - 1 040 669**

(73) Proprietor: **Exxon Research and Engineering
Company
P.O.Box 390 180 Park Avenue
Florham Park New Jersey 07932 (US)**

(72) Inventor: **Luallin, Edwin Duane
3601 Autumm Lane
Baytown, Texas 77520 (US)**

(74) Representative: **Northover, Robert Frank
ESSO Chemical Limited Esso Chemical Research
Centre P.O. Box 1
Abingdon Oxfordshire, OX13 6BB (GB)**

Courier Press, Leamington Spa, England.

## Description

The polymerization of olefins, particularly propylene, is well known and well described in the patents and literature. A number of reaction, catalyst deactivation and product recovery schemes are also well known and widely described. However, certain methods for each step are known to have considerable advantages over other methods such as, for example, an autorefrigerated reaction vessel wherein the monomer, diluent if applicable, catalyst and, when applicable, molecular hydrogen are brought together in a reaction zone having both a liquid and vapor phase. One such reaction scheme utilizing an autorefrigerated reactor is described in U.S. Patent Nos. 3,259,614 and 4,058,652, for example. The vaporization of the liquid, preferably propylene, in which the reaction is being conducted, removes heat from the reaction mixture, thus maintaining the temperature and pressure relationships in the reaction medium. The propylene thus removed can then be cooled either by indirect heat exchange or direct contact with cooler fluids, usually liquid propylene, and returned to the reactor. Often this return of the liquid propylene provides a convenient way for adding catalyst components, or hydrogen, to the reaction zone. The autorefrigerated reaction scheme is advantageous for use in the manufacture of polypropylene since heat removal is simplified and more efficient allowing the advantages of large scale operation to be realized. Fouling problems are also minimized resulting in longer run length before cleaning.

Further, in the recovery of solid polymeric propylene or copolymers of propylene and other olefins such as, for example, ethylene, it is known to clean the solid polymer containing catalyst residue by a liquid phase washing with a hydrocarbon, such as heptane and/or alcohol, to remove the catalyst residues, or "ash", and amorphous polymer, to provide a purified product which will meet commercial product specifications. To meet such specifications, the catalyst residue and amorphous polymer must be removed to the extent that the polypropylene contain not more than about 5 to 15 ppm titanium, about 10 ppm aluminum, and less than about 20 ppm of chlorine. Typically, purified polypropylene product would contain at least about 95% boiling heptane insoluble isotactic polypropylene. However, hydrocarbon/alcohol wash methods require considerable separation steps and energy consumption to recover and recycle the materials.

Another known washing technique, washing with liquid propylene, is particularly preferred since it avoids the introduction of extraneous hydrocarbons (diluent), alcohols, etc. that require additional separation steps to prevent their introduction and/or chat of other resulting polar compounds into the polymerization reactor (during recycle). Washing with liquid propylene is satisfactory for lowering the impurities content such as catalyst residues and amorphous, soluble, polymer to acceptable levels. The liquid propylene wash of solid propylene polymers is described in many U.S. patents such as, for example, U.S. Patent No. 3,356,669 which describes a liquid propylene wash system as well as other prior art extractants for catalyst residues. But this patent points out the difficulty of using such a system heretofore in that it requires the use of a liquid phase polymerization reaction zone and catalyst deactivation system to take advantage of the liquid phase wash with propylene. Moreover, the liquid propylene wash system described therein is operated batch-wise, utilizing progressively decreasing temperatures for the liquid propylene wash media.

U.S. Patent No. 3,259,614 describes a process whereby the propylene is polymerized in an autorefrigerated reactor. The patent further discloses introducing propylene into the bottom of a draw-off leg to wash propylene soluble catalyst residue and propylene soluble polymer countercurrently back into the bottom of the reactor. However, even with this procedure the propylene insoluble catalyst must still be deactivated, solubilized and removed from the polymer slurry in order to produce purified solid polymer product. In the described process, such would require the use of a deashing zone separate from the polymerization reactor and draw-off leg to avoid the introduction of catalyst deactivating agent into the reactor which otherwise would have adverse effects on the polymerization reaction.

Belgium Patent No. 824,438, published May 15, 1975, equivalent to U.S. Patent 4,053,697, also describes a system whereby a liquid phase reactor using propylene as the reaction medium is used in conjunction with a counter-current liquid propylene wash column. Considerable accommodation is necessary in order to provide cooling for the reactor. Moreover, there is no mention of the problem of flashing of the polymer slurry at the entrance into the wash zone as described hereafter. An autorefrigerated reactor which has a propylene liquid phase and a vapor phase system could have helped solve the cooling problem but, until now, a method for combining an autorefrigerated reactor and a liquid propylene wash was not available.

Thus, it is seen from the foregoing and other patents in the art that washing polymer impurities such as, for example, catalyst residues and soluble polymer, from solid propylene polymers by liquid propylene washing, and preparing a solid propylene polymer in an autorefrigerated reactor are, separately, known. Yet, until this invention, those skilled in the art have not heretofore been able to take advantage of these two individually desirable processing steps in a single method. Direct introduction of the reactor slurry into the liquid propylene wash zone with the attendant pressure drop necessary to convey the polymer slurry would cause flashing of propylene to vapor with the resulting agitation adversely affecting the efficient operation of the product wash. In the present invention the problems of the prior art have been solved by the introduction of a degassing and catalyst deactivation step between the autorefrigerated reactor and the polypropylene wash step so that the advantages of autorefrigeration in the polymerization reaction and a propylene washing step may be obtained in a single process.

Thus the following described invention combines these two highly desirable processing steps into an efficient unitary method for the preparation of polypropylene or copolymers of propylene and other olefins, i.e., ethylene.

In one aspect this invention provides a method for producing a solid polypropylene or propylene copolymer product which comprises a method for producing a solid polypropylene or propylene copolymer product which comprises:

contacting a Ziegler-type polymerization cocatalyst system with a body of liquid propylene at an elevated temperature in a reaction zone;

withdrawing portions of the liquid phase as a slurry containing solid polymerized product, liquid propylene, amorphous polymer and catalyst residue from the reaction zone;

adding an effective amount of agents for catalyst deactivation and solubilization to the slurry for a time sufficient to deactivate and solubilize catalyst residues;

introducing the slurry into a wash zone;

contacting the slurry with liquid countercurrently in the wash zone to separate deactivated, solubilized catalyst residue and amorphous polymer from the solid polymer product; and

recovering the resulting purified solid polymer product, characterized by the following in combination:

(1) that the reaction zone has a propylene liquid phase and a propylene vapor phase;

(2) that the vapor phase is continuously withdrawn from the reaction;

(3) that the reaction zone is maintained at a temperature and pressure at which the vapor phase and liquid phase are in equilibrium;

(4) that the slurry withdrawn from the reaction zone is introduced into a degassing zone maintained at a pressure below that of the reaction zone and that vaporized propylene is removed from the slurry in the degassing zone;

(5) that the agents for deactivation and solubilization of the catalyst are added to the slurry in the degassing zone; and

(6) that the slurry is washed with liquid propylene in the washing zone which is maintained at the same pressure as the degassing zone.

Polymers of propylene and copolymers thereof are prepared by contacting liquid propylene with a Ziegler-type cocatalyst system comprising a titanium halide component and an organo-metal component, in a reaction zone having a liquid phase and a vapor phase, operated at a pressure whereby the liquid and vapor phases are in equilibrium. The reaction occurs in the liquid phase to produce a slurry of solid polymer, usually from 40 to 60 weight percent of the liquid phase. The polymer, as is characteristic of the polymerization of propylene, is contaminated with catalyst residue which must be deactivated and, ultimately, removed along with soluble, amorphous polymer. The heat of the reaction is removed by withdrawing propylene vapors from the vapor phase of the reaction zone. This polymerization reaction process is referred to in the art as an autorefrigerated process. As mentioned, inherent in this reaction process is the necessity to operate the reactor at a pressure whereby the propylene liquid and vapor phases are in equilibrium. The liquid slurry, containing solid polypropylene, catalyst residue, amorphous polymer and liquid propylene is withdrawn from the polymerization reaction zone and introduced into a degassing zone where the pressure is lowered to a point below that at which the reaction zone was being maintained to convey the slurry from the reaction zone and to allow additional propylene to vaporize, thus further reducing the slurry temperature somewhat. The polymer is also contacted with catalyst deactivating agents and mixed, in this degassing zone, for a period of time sufficient to accomplish deactivation and solubilization of the catalyst.

Other advantages of the utilization of the degassing zone have been found; these are that the zone may act as a hold tank to provide efficient catalyst deactivation and solubilization and to serve as a surge tank, or buffer, between the reaction zone and a polymer wash zone. The pressure differential also allows the transfer of slurry from the reaction zone to wash zone.

The slurry is then conducted to a liquid-full polymer wash zone wherein it is introduced into a tower such that the solid polymer of the slurry flows downwardly in countercurrent flow with liquid propylene which is introduced through a bottom inlet of the wash zone. This countercurrent wash with propylene accomplishes removal of impurities, i.e., deactivated soluble catalyst and soluble polymer residues from the solid polymer which is recovered out of the bottom of the wash zone. The wash zone is operated at a pressure below that of the reaction zone, i.e., substantially the same as that of the degassing zone, in order to utilize the pressure differential to move the slurry through all zones of the process.

The invention will be better understood from the following description, when taken with the accompanying drawings, in which:

Figure 1 is a schematic flow sheet, with common valves, fittings, instruments, pumps, motors and the like omitted, showing the method of this invention; and

Figure 2 is a schematic flow sheet showing a preferred embodiment of the invention wherein a degassing zone and liquid propylene wash zone are a part of a single vessel. The aforementioned valves, fittings, instruments, pumps, motors, and the like are also omitted from this drawing.

Broadly speaking, the present invention resides in employing an autorefrigerated polymerization reactor for the polymerization of propylene and a liquid-full propylene wash system for product purification, operated at different pressures, which is accomplished by employing means, inter-connecting the autorefrigerated reactor and wash systems, for degassing the liquid polymer slurry from the reactor for passage of the slurry to and through the wash system. The contents of the autorefrigerated reaction zone have a vapor phase and a liquid phase wherein the heat of reaction is removed by the vaporization of liquid propylene reaction media. One such system of autorefrigerated reactor operation especially suited for the method of this invention is described in U.S. Patent No. 4,058,652. The propylene, and other olefins if a copolymer is being prepared, contacts a Ziegler-type polymerization cocatalyst system, usually in the presence of hydrogen, and react in the liquid phase at an elevated temperature, preferably from 110° (43.3°C) to 190°F (87.7°C), and more preferably from 140° (60°C) to 170°F (76.7°C) and preferably at a pressure of from 300 (2.07 MPa) to 600 psig (4.1 MPa) or more preferably from 450 (3.1 MPa) to 550 psig (3.8 MPa), such that the propylene liquid and vapor phases are in equilibrium. Especially preferred is the selection of conditions where the propylene in the reactor is boiling. The temperature and pressure may vary but the reaction readily occurs and the residence time in such reactor, whether operated in batch mode or continuously, would be from 1 to 4 hours or until a concentration of the solid polymer in the liquid propylene phase reaches from 40 to 60 weight percent or preferably from 45 to 50 weight percent. In continuous reaction systems this would be maintained by balancing the propylene monomer being charged with the solid polymer slurry being extracted.

The polymerization step of the process of this invention may be carried out employing any known catalyst components of the Ziegler-type cocatalyst system for polymerization of alphaolefins. The Ziegler-type cocatalyst system, which is well known, essentially comprises a solid titanium trichloride-containing compound and an organo-metal compound, usually an aluminum alkyl compound, such as aluminum triethyl, diethylaluminum chloride, and the like. The overall method of this invention is particularly adaptable for use with titanium trichloride-containing catalyst components having high catalytic activity.

Such highly active titanium trichloride catalyst components, and methods for their production, have heretofore been described in the prior art. Generally, they are produced by the reduction of titanium tetrachloride with an organoaluminum compound, e.g., an alkylaluminum halide, followed by an activation step which results in the conversion of the reduction product to a product which contains $TiCl_3$ of the $\delta$-type. In British Patent No. 1,391,067 of Solvay & Cie, published April 16, 1975, such a highly active catalyst is obtained by treating such reduction product with a dialkyl ether and titanium tetrachloride until such conversion is obtained. Another activation procedure is described in Belgium patent 852,183 wherein such reduction product is treated with a $C_2$ saturated chlorinated hydrocarbon in the presence of a dialkyl ether.

In accordance with the present invention, the amount of catalyst components will vary widely and depend at least in part on the specific cocatalyst system chosen. The amount of titanium trichloride-containing compound used is generally in the range of $0.5 \times 10^{-4}$ to $10 \times 10^{-4}$ gm/gm of monomer. The alkylaluminum compound component is usually used in an amount of 0.5 to 5 mols per 1 gram atom of titanium in the titanium trichloride-containing component and should be in an amount of at least $1.0 \times 10^{-4}$ gm/gm of monomer. The components of the cocatalyst system may be added to the reaction zone separately or mixed together with a hydrocarbon diluent and fed to the reaction zone with the propylene feed, all in accordance with known procedures.

Usually the polymerization step of the process is carried out in the presence of elemental hydrogen is usually added in an amount sufficient to provide from 0.03 to 0.4 mol percent hydrogen, preferably 0.1 to 0.3 mol percent, in the liquid propylene phase of the polymerization reaction zone. By this means the productivity of the cocatalyst system, melt index and flexural modulus values of the polypropylene product are increased. Of course, whether or not hydrogen is employed depends upon the particular product desired and in the practice of this invention may well be omitted.

The method of this invention employs propylene in the liquid phase which acts both as the reaction medium and the raw material for the polymerization. Thus, the propylene must be continuously added to the mass, or bulk, polymerization system during the reaction. As is known, commercially available propylene generally contains minor amounts, sometimes up to 10%, of materials such as paraffinic hydrocarbons which would be inert materials in the polymerization of propylene.

Use of these commercially available streams of propylene feed are to be considered within the scope of this invention as well as more pure propylene feed available without these inert diluents, or impurities.

As mentioned before, the process is preferably carried out in the autoregrigerated reaction zone containing the boiling propylene in the liquid phase and a vapor phase produced by such boiling propylene. The heat produced by the reaction is conducted away from the reaction zone by the vaporization of the propylene which is, as will be more completely described later, cooled and recycled to the reactor.

The liquid phase of the reactor containing, in a slurry from 40 to 60 weight percent of the solid polypropylene polymer, any soluble polymer present, the catalyst residue accompanying such solid polymer, and liquid propylene, are next conducted continuously or batchwise to a degassing zone wherein the pressure of the liquid slurry is preferably lowered to from 40 (0.28 MPa) to 200 psig (1.38 MPa), or more preferably from 40 (0.28 MPa) to 75 psig (0.52 MPa), less than the operating pressure of the reaction zone. This is done to allow the transfer of reactor effluent from the reactor to the liquid propylene wash zone to allow additional propylene to be vaporized and to lower the temperature of the liquid phase slurry to facilitate the washing which propylene in the liquid phase in the wash zone. Additionally, the degassing zone is preferably operated at a temperature from 120° (48.9°C) to 180°F (82.2°C), preferably from 130° (54.4°C) to 160°F (71.1°C).

Care must be taken to avoid dropping the pressure to such a point that excessive amounts of the liquid propylene are vaporized leaving a mass of the solid polymer which is too thick to flow readily from the degassing zone. If such should occur however, it is permissible to introduce some fresh propylene into the degassing zone to sweep the solid polymer to the wash zone. Typically, the pressure of the degassing zone will be at a preferred value of (2.76 MPa) to 500 psig (3.4 MPa) which is generally sufficient to allow the feeding of a wash zone overhead stream to a subsequent propylene recovery step without the need of a compressor. A difference of 50 psig (0.34 MPa) between the reaction zone and degassing zone has been found to be satisfactory.

Further, the degassing zone serves as a zone for efficient deactivation and solubilization of the polymerization catalyst. This is accomplished by adding an effective amount of one of the many known catalyst deactivation agents to the liquid slurry stream, either prior to the introduction into the degassing zone or into the zone itself. The contents of the degassing zone, for efficient catalyst deactivation and solubilization, should be agitated either through a motor and stirrer, preferred, or through some other method to promote intimate contact of the deactivation agents with the polymer. These catalyst deactivation-solubilization agents are well known and a number of such agents are described in U.S. Patent No. 3,271,380, for example. Preferred, however, in the use and the practice of this invention are propylene oxide, epichlorohydrin or acetylacetone in conjunction with a chelating agent if desired such as those well known in the art. Usually, the effective amount to deactive and solubilize the catalyst, is from about 1 to 5 times the stoichiometric equivalent, based upon the amount of titanium trichloride catalyst compound present.

The slurry containing the polymer is contacted with a sufficient amount of the catalyst deactivating-solubilizing agent, with stirring, preferably for 5 to 45 minutes or more preferably from 10 to 15 minutes, i.e., the time necessary to deactivate and solubilize the catalyst contaminants. This time should be allowed to control the residence time within the degassing zone. The propylene which is vaporized within the zone is removed overhead and recovered for further use.

The liquid slurry, after catalyst deactivation-solubilization, is taken out at the bottom of the degassing zone, preferably through a loop seal, or internal down comer, which allows flow of the material without pumping to a full liquid propylene wash zone which is usually in the form of a column, either separate or integral with the vessel housing the degassing zone.

The wash zone is operated in the full liquid phase wherein the polymer is cleaned by removal of previously mentioned product impurities by a liquid propylene wash, usually in countercurrent flow. The pressure of the wash zone is maintained such that it is approximately the same pressure as is present in the degassing zone. Additionally, the wash zone is preferably operated at a temperature within the range of 70°F (21.1°C) to 130°F (54.4°C) to obtain maximum washing efficiency with liquid propylene. As is well known, and particularly as described in Belgian Patent No. 824,438 the washing occurs in countercurrent flow with the impurities being moved from the polymer to leave a relatively pure polypropylene or copolymer of propylene to be recovered from the bottom of the wash zone.

The liquid propylene wash is fed to the wash zone through a bottom inlet preferably at a ratio of from 0.5 to 5 kg of fresh propylene per kg of solid polymer in the slurry charged to the zone. More preferably, the ratio is from 1 to 3 kg of propylene per kg of solid polymer in the slurry. In the countercurrent wash, the solubilized catalyst residue, amorphous polymer and the liquid propylene reaction medium entering the wash zone with the polymer product are separated from the product which is recovered from the bottom. The liquid, including the solubilized catalyst residues and soluble polymer, is removed overhead from the column through an upper outlet stream to a fractionating zone for recovery of the propylene which then can be used again either to add liquid, if necessary, to the degassing zone, as a charge for the reaction zone or as feed for the wash zone.

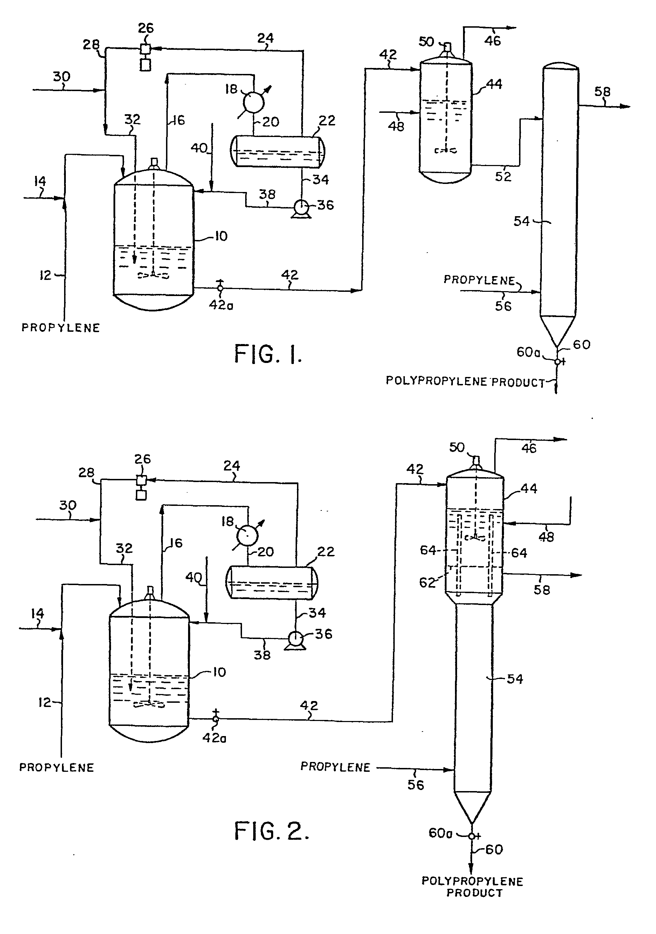

Turning now to Fig. 1, propylene, and other olefin monomers if copolymers are to be produced, is charged to an autorefrigerated reactor 10 through line 12. The reactor as described in U.S. Patent No. 4,058,652 is especially suited for use as the autorefrigerated reactor for use in this process. The catalyst (Ziegler-type cocatalyst system) is preferably mixed with the propylene in line 12 through line 14 but may be added directly to the reactor 10. The polymerization reaction occurs in reactor 10 in a liquid phase as previously described with a vapor phase being removed from the reactor through line 16 where it is cooled in heat exchanger 18 and discharged through line 20 into a separation drum 22 wherein the vapors remaining uncondensed are removed through line 24, compressed in compressor 26 and exit through line 28. Hydrogen, if used in the polymerization reaction, is added to the liquid propylene in line 28 through line 30 and the mixture discharged through line 32 into the reaction zone of the reactor vessel 10, preferably below the level of the liquid in the reaction zone as shown in Fig. 1.

The liquid propylene from the separator 22 is withdrawn as a bottoms stream through line 34 and pumped by pump 36 through line 38 to the reactor vessel 10, preferably through a spray means (not shown) for countercurrent contact with the propylene vapor phase to remove entrained solid polymer particles for enhanced reactor antifouling. Additional catalysts or cocatalysts can be added through line 40 and introduced into the reaction vessel 10.

The liquid slurry as previously described, exits the bottom of the autorefrigerated reactor 10 through line 42 via valve 42a and is introduced into the degassing zone in vessel 44. Additional propylene is vaporized in the degassing zone, operated by pressure differential as previously described, and the vapors are removed through line 46 for recovery and further use. The catalyst deactivating agents are introduced through line 48 directly to the degassing zone but can, alternatively, be introduced directly into line 42 and enter the degassing zone of vessel 44 along with the liquid polymer slurry removed from the reaction zone or the reaction vessel 10. The liquid in the degassing zone of vessel 44 is agitated by motor and stirrer 50. The slurry in the degassing zone of vessel 44 is removed through line 52 and introduced into the liquid propylene wash zone in vessel 54.

Propylene wash liquid is introduced into vessel 54 through a bottom inlet line 56 and contacts the solid polymer moving downwardly through the vessel 54 in countercurrent flow as the liquid propylene moves upward, removing the impurities from the polymer to exit vessel 54 through an upper outlet line 58. The liquid slurry is introduced into vessel 54 at a point near the opening for the outlet line 58 such that maximum contact with the upwardly flowing propylene wash liquid is obtained. The solid polypropylene product is withdrawn from the bottom of vessel 54 through line 60 via valve 60a for drying and any further processing.

Figure 2 is a preferred embodiment of the method described hereinabove with respect to Figure 1 except that the vessel 44 containing the degassing zone is integral with the vessel 54 enclosing the liquid propylene wash zone with a partition 62 separating the two zones and transfer of the liquid from the degassing zone in vessel 44 to the extraction zone in vessel 54 is accomplished through a plurality of internal down comers 64 through the partition 62 between the two zones. This transfer of liquid could also be accomplished externally through a loop seal between the zones.

## Claims

1. A method for producing a solid polypropylene or propylene copolymer product which comprises:

contacting a Ziegler-type polymerization cocatalyst system with a body of liquid propylene at an elevated temperature in a reaction zone;

withdrawing portions of the liquid phase as a slurry containing solid polymerized product, liquid propylene, amorphous polymer and catalyst residue from the reaction zone;

adding an effective amount of agents for catalyst deactivation and solubilization to the slurry for a time sufficient to deactivate and solubilize catalyst residues;

introducing the slurry into a wash zone;

contacting the slurry with liquid countercurrently in the wash zone to separate deactivated, solubilized catalyst residue and amorphous polymer from the solid polymer product; and

recovering the resulting purified solid polymer product, characterized by the following in combination:

(1) that the reaction zone has a propylene liquid phase and a propylene vapor phase;

(2) that the vapor phase is continuously withdrawn from the reaction;

(3) that the reaction zone is maintained at a temperature and pressure at which the vapor phase and liquid phase are in equilibrium;

(4) that the slurry withdrawn from the reaction zone is introduced into a degassing zone maintained at a pressure below that of the reaction zone and that vaporized propylene is removed from the slurry in the degassing zone;

(5) that the agents for deactivation and solubilization of the catalyst are added to the slurry in the degassing zone; and

(6) that the slurry is washed with liquid propylene in the washing zone which is maintained at the same pressure as the degassing zone.

2. A method according to claim 1 characterized in that the reaction zone is maintained at a temperature of from 43.3°C to 87.7°C and from 2.07 MPa to 4.1 MPa pressure.

3. A method according to claim 1 or claim 2 characterized in that the degassing zone is operated at a pressure of from 0.28 MPa to 1.38 MPa less than the pressure in the reaction zone and that the slurry has a residence time in the degassing zone of from 5 to 45 minutes.

4. A method according to any of claims 1 to 3, characterized in that the slurry from the degassing zone is introduced into the wash zone at a point intermediate a lower inlet for fresh propylene and an upper outlet for recovery of propylene wash liquid such that the solid polymer product contacts the fresh propylene in counter-current flow.

5. A method according to any of claims 1 to 4, characterized in that the wash zone is operated at a temperature of from 21.1°C to 54.4°C.

6. A method according to any of claims 1 to 5, characterized in that fresh propylene is fed to the wash zone in an amount within the range of 0.5 to 5 kg of fresh propylene per kg of solid polymer in the slurry.

7. A process according to any of claims 1 to 6, characterized in that propylene vapors removed from the reaction zone are cooled and returned in liquid phase to the reaction zone.

8. A method according to any of claims 1 to 7, characterized in that the liquid phase in the reaction zone has a concentration of solid polymer products of from 40% to 60% by weight.

9. A method according to any of claims 1 to 8, characterized in that:

(1) the reaction zone is maintained at a temperature from 60°C to 77°C and a pressure of from 3.1 MPa to 3.8 MPa

(2) that the concentration of solid polypropylene formed as a slurry in the liquid phase of the reaction zone is from 45 to 50 weight percent;

(3) that propylene vapors are recovered from the vapor phase of the reaction zone and cooled to partially condense same to liquid propylene;

(4) that liquid propylene formed in (3) above is returned to the reaction zone and that the propylene vapors recovered in (3) above are compressed and returned to the reaction zone;

(5) that the slurry is maintained in the degassing zone for from 10 to 15 minutes;

(6) that the temperature in the degassing zone is maintained at from 54.4°C to 71.1°C, that the pressure in the degassing zone is maintained at 0.28 MPa to 0.52 MPa lower than the pressure in the reaction zone and that propylene vapor is removed from the degassing zone;

(7) that liquid propylene is introduced to the zone at a rate of from 1 to 3 kg per kg of solid propylene in the slurry; and

(8) that the wash zone is maintained at substantially the same pressure as the degassing zone and a temperature of 21.1°C to 54.4°C.

**Revendications**

1. Procédé de production de polypropylène ou d'un copolymère de propylène solide, qui comprend:

la mise en contact d'un système cocatalyseur de polymérisation du type Ziegler avec une masse de propylène liquide à une température élevée dans une zone de réaction;

le retrait, de la zone de réaction, de certaines parties de la phase liquide sous la forme d'une suspension contenant un produit polymérisé solide, du propylène liquide, un polymère amorphe et un résidu de catalyseur;

l'addition d'une quantité efficace d'agents de désactivation et de solubilisation du catalyseur à la suspension pendant une durée suffisante pour désactiver et solubiliser les résidus de catalyseur;

l'introduction de la suspension dans une zone de lavage;

la mise en contact de la suspension avec un liquide à contre-courant dans la zone de lavage pour séparer du polymère solide produit le résidu de catalyseur désactivé et solubilisé et le polymère amorphe; et

la récupération du polymère solide purifié produit résultant, caractérisé en ce que, en combinaison:

(1) la zone de réaction contient une phase liquide constituée de propylène et une phase vapeur constituée de propylène;

(2) la phase vapeur est retirée en continu de la réaction;

(3) la zone de réaction est maintenue à une température et une pression auxquelles la phase vapeur et la phase liquide sont en équilibre;

(4) la suspension retirée de la zone de réaction est introduite dans une zone de dégazage maintenue à une pression inférieure à celle de la zone de réaction et le propylène vaporisé est retiré de la suspension dans la zone de dégazage;

(5) les agents de désactivation et de solubilisation du catalyseur sont additionnés à la suspension dans la zone de dégazage; et

(6) la suspension est lavée au propylène liquide dans la zone de lavage qui est maintenue à la même pression que la zone de dégazage.

2. Procédé selon la revendication 1, caractérisé en ce que la zone de réaction est maintenue à une température de 43,3°C à 87,7°C et une pression de 2,07 MPa à 4,1 MPa.

3. Procédé selon la revendication 1 ou la revendication 2, caractérisé en ce que l'on fait travailler la zone de dégazage à une pression inférieure de 0,28 MPa à 1,38 MPa à la pression régnant dans la zone de réaction, et en ce que le temps de séjour de la suspension dans la zone de dégazage est de 5 à 45 minutes.

4. Procédé selon l'une quelconque des revendications 1 à 3, caractérisé en ce que la suspension provenant de la zone de dégazage est introduite dans la zone de lavage en un point situé entre une entrée inférieure du propylène frais et une sortie supérieure pour la récupération du liquide de lavage du propylène de manière que le polymère solide produit entre en contact avec le propylène frais en s'écoulant à contre-courant.

5. Procédé selon l'une quelconque des revendications 1 à 4, caractérisé en ce que l'on fait travailler la zone de lavage à une température de 21,1°C à 54,4°C.

6. Procédé selon l'une quelconque des revendications 1 à 5, caractérisé en ce que du propylène frais est introduit dans la zone de lavage en quantité comprise dans la plage de 0,5 à 5 kg de propylène frais par kg de polymère solide se trouvant dans la suspension.

7. Procédé selon l'une quelconque des revendications 1 à 6, caractérisé en ce que des vapeurs de propylène retirées de la zone de réaction sont refroidies et renvoyées en phase liquide à la zone de réaction.

8. Procédé selon l'une quelconque des revendications 1 à 7, caractérisé en ce que la phase liquide de la zone de réaction présente une concentration de polymère solide produit comprise entre 40% et 60% en poids.

9. Procédé selon l'une quelconque des revendications 1 à 8, caractérisé en ce que:

(1) la zone de réaction est maintenue à une température de 60°C à 77°C et à une pression de 3,1 MPa à 3,8 MPa;

(2) la concentration du propylène solide formé en tant que suspension dans la phase liquide de la zone de réaction est de 45 à 50% en poids;

(3) des vapeurs de propylène sont récupérées de la phase vapeur de la zone de réaction et refroidies pour être partiellement condensées afin de donner du propylène liquide;

(4) le propylène liquide produit dans (3) ci-dessus est renvoyé à la zone de réaction et les vapeurs de propylène récupérées dans (3) ci-dessus sont comprimées et renvoyées à la zone de réaction;

(5) la suspension est maintenue dans la zone de dégazage pendant 10 à 15 minutes;

(6) la température de la zone de dégazage est maintenue entre 54,4°C et 71,1°C, la pression dans la zone de dégazage est maintenue à une valeur de 0,28 MPa à 0,52 MPa inférieure à la pression de la zone de réaction et la vapeur de propylène est retirée de la zone de dégazage;

(7) du propylène liquide est introduit dans la zone à un débit de 1 à 3 kg par kg de propylène solide dans la suspension; et

(8) la zone de lavage est maintenue sensiblement à la même pression que la zone de dégazage et à une température de 21,1°C à 54,4°C.

**Patentansprüche**

1. Verfahren zur Herstellung eines festen Polypropylen oder Propylenmischpolymerisates, bei dem an ein Polymerisationsmischkatalysator-System des Ziegler-Typs mit flüssigem Propylen bei erhöhter Temperatur in einer Reaktionszone in Kontakt bringt,

Anteile der flüssigen Phase als Aufschlämmung, enthaltend das feste polymerisierte Produkt, flüssiges Propylen, amorphes Polymer und Katalysatorrückstand, aus der Reaktionszone abführt,

eine wirksame Menge von Mitteln zur Deaktivierung des Katalysators und Solubilisierung der Aufschlämmung während einer Zeit zufügt, die ausreicht, die Katalysatorrückstande zu deaktivieren und zu solubilisieren,

die Aufschlämmung in eine Waschzone einführt,

Die Aufschlämmung im Gegenstrom mit Flüssigkeit in der Waschzone in Kontakt bringt, um den deaktivierten, solubilisierten Katalysatorrückstand und das amorphe Polymer aus dem festen polymeren Produkt abzutrennen und das erhaltene, gereinigte, feste polymere Produkt wiedergewinnt, dadurch gekennzeichnet:

(1) daß die Reaktionszone eine flüssige Propylen-Phase und eine Propylen-Gasphase aufweist,

(2) daß die Dampfphase kontinuierlich aus der Reaktion abgezogen wird,

(3) daß die Reaktionszone bei einer Temperatur und einem Druck gehalten wird, wo sich Dampfphase und flüssige Phase in Gleichgewicht befinden,

(4) daß die aus der Reaktionszone abgezogene Aufschlämmung in eine Entgasungszone eingeführt wird, die bei einem Druck unterhalb der der Reaktionszone gehalten wird und das verdampfte Propylen aus der Aufschlämmung in der Entgasungszone entfernt wird,

(5) daß die Mittel für die Deaktivierung und Solubilisierung des Katalysators der Aufschlämmung in der Entgasungszone zugegeben werden und

(6) daß die Aufschlämmung mit flüssigen Propylen in der Waschzone gewaschen wird, die bei gleichem Druck wie die Entgasungszone gehalten wird.

2. Verfahren nach Anspruch 1, dadurch gekennzeichnet, daß die Reaktionszone bei einer Temperatur von 43,3°C bis 87,7°C und einem Druck von 2,07 MPa bis 4,1 MPa gehalten wird.

3. Verfahren nach Anspruch 1 oder 2, dadurch gekennzeichnet, daß die Entgasungszone bei einem Druck von 0,28 bis 1,38 MPa, weniger als der Druck in der Reaktionszone betrieben wird und daß die Aufschlämmung eine Verweilzeit in der Entgasungszone von 5 bis 45 Minuten hat.

4. Verfahren nach einem der Ansprüche 1 bis 3, dadurch gekennzeichnet, daß die Aufschlämmung aus der Entgasungszone in die Waschzone an einem Punkt zwischen einem unteren Einlaß für das frische Propylen und einem oberen Auslaß zur Wiedergewinnung der Propylen-Waschflüssigkeit in einer Weise eingeführt wird, daß das feste polymere Produkte im Gegenstrom mit dem frischen Propylen in Kontakt kommt.

5. Verfahren nach einem der Ansprüche 1 bis 4, dadurch gekennzeichnet, daß die Waschzone bei einer Temperatur von 21,1 bis 54,4°C betrieben wird.

6. Verfahren nach einem der Ansprüche 1 bis 5, dadurch gekennzeichnet, daß frisches Propylen der Waschzone in einer Menge innerhalb des Bereichs von 0,5 bis 5 kg frisches Propylen pro kg festes Polymer in der Aufschlämmung zugeführt wird.

7. Verfahren nach einem der Ansprüche 1 bis 6, dadurch gekennzeichnet, daß die aus der Reaktionszone abgeführten Propylendämpfe abgekühlt und in flüssiger Phase in die Reaktionszone zurückgeführt werden.

8. Verfahren nach einem der Ansprüche 1 bis 7, dadurch gekennzeichnet, daß die flüssige Phase in der Reaktionszone eine Konzentration an festen polymeren Produkten von 40 bis 60 Gew.-% haben.

9. Verfahren nach einem der Ansprüche 1 bis 8, dadurch gekennzeichnet, daß

(1) die Reaktionszone auf einer Temperatur von 60 bis 77°C und einem Druck von 3,1 bis 3,8 MPa gehalten wird,

(2) daß die Konzentration des als Aufschlämmung gebildeten festen Polypropylens in der flüssigen Phase der Reaktionszone von 45 bis 50 Gew.-% beträgt,

(3) daß die Propylendämpfe aus der Dampfphase der Reaktionszone wiedergewonnen, abgekühlt und teilweise zu flüssigem Propylen kondensiert werden,

(4) daß das in (3) gebildete flüssige Propylen in die Reaktionszone zurückgeführt wird und die in (3) erhaltenen Propylendämpfe komprimiert und in die Reaktionszone zurückgeführt werden,

(5) daß die Aufschlämmung in der Entgasungszone 10 bis 15 Minuten gehalten wird,

(6) daß die Temperatur in der Entgasungszone bei 54,4 bis 71,1°C gehalten wird, daß der Druck in der Entgasungszone bei 0,28 bis 0,52 MPa, niedriger als der Druck in der Reaktionszone beträgt und der Propylendampf aus der Entgasungszone abgeleitet wird,

(7) daß flüssiges Propylen in die Zone mit einer Geschwindigkeit von 1 bis 3 kg pro kg des festen Propylens in der Aufschlämmung eingeführt wird und

(8) daß die Waschzone praktisch bei gleichem Druck wie die Entgasungszone und bei einer Temperatur von 21,1 bis 54,4°C gehalten wird.

FIG. I.

FIG. 2.